# EUROPEAN PATENT SPECIFICATION

(11) **EP 0 325 363 B1**
(45) Date of publication and mention of the grant of the patent: **08.03.1995**
(21) Application number: 89300240.2
(22) Date of filing: 12.01.1989
(51) Int. Cl.: H04N 9/31, G02F 1/23

(54) **Spectral conditioner**
Spektralbedingungsvorrichtung
Dispositif de condition spectrale

(30) Priority: 19.01.1988 US 145174
(43) Date of publication of application: 26.07.1989
(73) Proprietor: Hewlett-Packard Company, Palo Alto, California 94304 (US)
(72) Inventor: Vincent, Kent D., Cupertino California 95014 (US); Neumann, Hans D., Los Altos California 94022 (US)
(74) Representative: Colgan, Stephen James

(56) References cited:
- EP-A- 0 240 000
- EP-A- 0 245 566
- WO-A-89/05470
- US-A- 4 087 176
- PATENT ABSTRACTS OF JAPAN, vol. 11, no. 107 (P-563)[2554], 4th April 1987 ; & JP-A-61 255 320

## Description

### Background of the Invention

### A. Field of Invention

The present invention pertains generally to optics and more specifically to color separators, color combiners and inventions utilizing color separators and color combiners.

### B. Description Of The Background

Color imagers include color video cameras and color scanners for commercial printing. Color imagers transform color pictures into machine readable data. This is accomplished by dividing a color image into many small portions called pixels. The color imager separates light from each pixel into red, blue or green light. Numbers assigned to each pixel of the color image represent the red, blue, and green light. A fast, high resolution, accurate color imager would enhance the usefulness of computers and automate numerous tasks. For example, computers can print and display color images. However, the lack of fast, accurate, and high-resolution means for transferring color images into a computer limits the use of this capability. In the early prior art, discrete optical components, such as beamsplitters and color filters, separate the color components of an image. Dichroic beamsplitters have been widely used due to the combined functions of these devices as both beamsplitters and filters. Dichroic beamsplitters employ selected multilayer dielectric interference optical filter coatings, hereinafter referred to as dichroic coatings. Typically, color separation is achieved by placing two discrete dichroic beamsplitters in the optical pathway between the projection lens of the imager and its photosensors. The first dichroic beamsplitter reflects a first spectral band (e.g., green) to the first photosensor while transmitting the remaining spectral bands to the second dichroic beamsplitter. The second dichroic beamsplitter reflects a second band (e.g., red) to a second photosensor while transmitting the remaining spectral band (e.g., blue) to the third photosensor. The disadvantage of this approach is that the respective dichroic beamsplitters and photosensors must be precisely aligned; otherwise, the color components will not have the proper optical coincidence. The costly alignment process limits the use of this prior art color separator. Dichroic beamsplitters (dichroic prism), as well as other prior art techniques of color scanning are described more fully in a Japanese article entitled "Image Scanners," OEP November 1986, pp. 18-22. As disclosed therein, the dichroic prism requires each sensor to be placed on a different plane.

With the advent of low-cost, solid-state photodiode array photosensors, various attempts have been made to develop lost cost color separation techniques for color scanners and video cameras.

Solid-state, photodiode arrays with integral color filters have been commercialized by Hitachi, Toshiba, Sony and RCA. These devices employ a two-dimensional array of photodiodes on a single silicon substrate. The array is coated with a gelatin layer, into which color dyes are selectively impregnated, using standard masking techniques. Each photodiode is, thus, given an integral color filter, e.g., red, green or blue, according to a color pattern which is repeated throughout the array. The same technology has been applied to one-dimensional photodiode array sensors for line scanners. The latter devices have been commercialized by Toshiba and Fairchild.

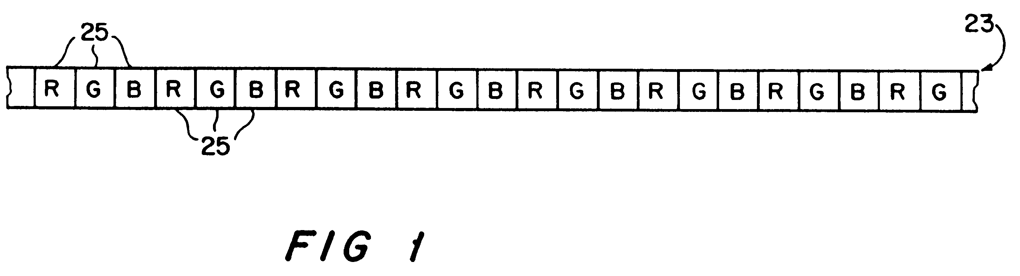

A prior art color imager using photodiode arrays is shown in Figure 1. The single linear photodiode array 23 has individual organic dye filters impregnated over each photodiode in a repetitive red, blue and green pattern. Color separation, the breaking down of a color image into red, blue and green light, is achieved by focusing the light beam on the array, as shown in Figure 1. One red, green and blue photodiode grouping 25 provides information to one color pixel. This prior art technique has several disadvantages. Since three photodiodes supply information to one pixel, the pixel resolution is reduced to one-third. For accurate color imaging, the luminance detail and chroma of a given color pixel from the original image must be resolved by three optically coincidental photosensor elements. However, the prior art photodiode arrays do not have color-coincidence. The red light is detected from one location, green from another, and blue from a third location. In addition, two-thirds of the light incident on each photodiode is lost by filter absorption (e.g., a red filter absorbs green and blue spectral bands). In order to increase the resolution, the array 23 must be lengthened or the photodiode area must be decreased. However, either of these approaches to increase the resolution will proportionately decrease scan speed. Also, the dye filters have less color band purity than dichroic filters. The prior art approach desaturates color sensitivity and is otherwise spectrally inaccurate.

Another prior art color imager using photodiode arrays has a rotating color wheel composed of colored filter segments. The lens focuses a line image of the original object on a linear photodiode array. The rotating color wheel filters the projected line image in a repeating color sequence, e.g., red, green, blue. The signal for each color component of a given line image is stored digitally until all three color components have been detected. The signals are then reordered in memory to assign three color values to each pixel in the line image.

The color wheel color separation technique has the advantages of utilizing the full resolution of the photodiode array as well as utilizing dichroic filters. However, it has several disadvantages. The scan speed is one-third of the integral sensor/filter scan speed, since only one of three colors is detected at a time. Also, further speed reduction results from transitions between filter segments during rotation of the wheel. When the color wheel and scan line are continuously driven, as opposed to synchronously "stepped", the effective resolution of the photodiode array is diminished in the scan direction by the movement of the scan line through the color cycle of the color wheel. Another disadvantage is the size of the color wheel which limits device extensibility. Page-width "contact" or "traversing head" type scanner embodiments become impossible or unwieldy. Further, this prior art device is burdened with a large moving mechanism and the control of this mechanism.

The Sharp Corporation of Japan has introduced a third prior art color separation technique for color document scanning. The Sharp scanner employs a single photodiode array with three sequentially-fired colored fluorescent lamps (e.g., red, green, blue), as the imaging light source. The sequence of signals obtained by the photodiode array is directly analogous to the color wheel color separator. That is, the input to the photodiode array is a sequential input of the red, green and blue components of a given original line image. Likewise, the photodiode signals for each color component are digitally stored and reordered in memory at the end of each color cycle.

Like the color wheel color separator, the tricolored lamp approach provides imaging means that utilize the full resolution of the photodiode array. Several shortcomings, however, limit the speed and color integrity of the imager. In order to obtain correct color separation, the light output from each lamp should be extinguised before the firing of the next lamp in sequence; blended lamp output produces undersaturated color detection. Scanning speed, as a result, is limited by the persistence time of the phosphors utilized in each fluorescent lamp or the ability to dynamically subtract out the signal produced by the decaying light output of a previously fired lamp. Color integrity is further limited by the selection of phosphors having persistence values sufficiently low to meet commercial scan speed specifications. Typically, external absorption filtering of the lamps is required to obtain the desired spectral characteristics or each lamp output. As with the colour wheel colour separator, when the scan line is continuously driven, as is desirable for scan speed, the effective resolution of the photodiode array is diminished in the scan direction by the movement of the scan line through the colour cycle of the sequentially-fired lamps. The size and bulk of the optical system comprising the three lamps likewise restricts device extensibility toward "contact" or "traversing head" type scanner applications.

Colour combiner devices suffer from many of the same disadvantages and limitations as the colour separators set forth above. A colour combiner, as defined herein, comprises an optical device for taking individual colour components and spatially and spectrally combining each of the individual beams into a single optical beam wherein each of the individual colour component beams have coincident optical axes. The prior art does not disclose any device that is capable of combining individual spectral beams, as described, in a simple and easy manner.

US-A-4 087 176 discloses a colour correction system which contains a plurality of colour channels which each contain a dichroic mirror and an electro-optical modulator. An unpolarized light source shining through a colour transparency serves as the input to each channel, and each colour is individually controlled by the electro-optical modulator in its respective channel. The colours of each channel are then recombined after correction.

EP-A-0 240 000 discloses a trichomatic beam splitter consisting of composited dichroic beam splitter plates that separate a projected image into its three colour components with spatial as well as spectral precision. A three linear array photosensor comprises a monolithic sensor having three parallel photodiode arrays spaced precisely to accept the colour component images of the trichomatic beam splitter.

The invention provides an electronic colour filter device for filtering an input optical beam, the device comprising:
spectral separator means for spatially and spectrally separating said input beam into a plurality of optical beams, said separator means comprising dichroic beam splitters for producing beams having predetermined spectral ranges and substantially parallel optical axes;
means defining apertures aligned with said plurality of beams, said apertures being arranged in a plane and being separately controllable to control the transmission intensities of the respective beams in response to an electrical filter control signal;
characterised in that the device further includes:
focusing means for focusing said input beams onto said plane, said spectral separator means being disposed between said focusing means and said plane; and said dichroic beam splitters being constructed and arranged so that said beams have substantially equal optical path lengths between said focusing means and said plane.

Preferably, the electronic colour filter device of the invention further comprises:
spectral combiner means for spatially and spectrally combining said plurality of beams into a single combined output beam having a predetermined single optical axis, and means for focusing said single combined output beam, said spectral combiner means comprising dichroic beam combiners which are constructed and arranged so that the plurality of optical beams have substantially equal optical path lengths between said plane and said means for focusing said single combined output beam.

An advantage of the present invention is that the spectral separator and combiner optical components are compact, inexpensive and easy to manufacture. Another advantage of the present invention is that the optical components produce colour coincidence within a pixel. That is, each portion of a pixel generates all three colour components so as to provide exact colour convergence and line acuity. The invention also provides accurate spectral and spatial separator as well as accurate spectral and spatial combination.

The optical combiner and optical separator components of the present invention are also extremely efficient in comparison to conventional filtration techniques since dichroic reflective layers are used. Essentially all of the incident light striking the components is transmitted with very little absorption. A conventional filter typically absorbs two spectral bands to transmit one. Since essentially all of the visible light is utilized, maximum speed is achievable for a give optical system.

Additionally, the optical components of the present invention do not require costly optical alignment. The dichroic coatings are precisely separated by glass plates and/or precise separator devices in the manufacturing process. This separation is determined by considering the refractive indices of the substances used in the optical separator and combiner components as well as the angles of incidence to provide a very precise alignment. The optical separator and combiner components provide equal optical path lengths for each of the individual beams with minimal alignment problems.

Also, since the present invention uses substantially parallel, spatially separated, spectral beams for both the combiner and separator optical components, a single object and image plane are employed in accordance with the present invention.

### Brief Description of the Drawings

Figure 1 is a prior art color sensor.

Figures 2 and 3 show dichroic beamsplitter plates.

Figure 4 shows a trichromatic beamsplitter made from the dichroic beamsplitter plates shown in Figures 2 and 3.

Figures 5 and 6 show the photosensor integrated circuit and photosensor arrays, respectively, used to detect light beams from the trichromatic beamsplitter shown in Figure 3.

Figure 7 shows the trichromatic photosensor shown in Figure 5 positioned to detect light beams from the trichromatic beamsplitter shown in Figure 4.

Figure 8 shows a construction means for the trichromatic beamsplitter.

Figure 9 shows an alternative structure of the trichromatic beamsplitter shown in Figure 7 with a prism attached.

Figure 10 shows the dual trichromatic beamsplitter with an attached prism.

Figure 11 shows an assembly view of the dual trichromatic beamsplitter with a prism.

Figure 12 shows an optical system employing the dual trichromatic beamsplitter with a prism.

Figure 13 shows an isometric view of the dual trichromatic beamsplitter with a prism.

Figure 14 shows an alternative structure of the invention.

Figure 15 is a test apparatus for the filters.

Figure 16 is the spectral transmission of the filters in Figures 2 and 3.

Figure 17 is the output of the lamp tailored to the spectral transmission shown in Figure 16.

Figure 18 is a schematic cut-away view of the trichromatic beamsplitter mounted with focusing optics and a three line CCD photodiode array.

Figure 19 is a schematic diagram illustrating an optical component that can function either as a color separator or a color combiner.

Figure 20 illustrates another optical component that can comprise either an optical separator or an optical combiner.

Figure 21 shows another optical component that can comprise either an optical separator or optical combiner.

Figure 22 illustrates the manner in which the plate separation and angle of incidence can be varied in the optical component that can comprise either the color separator or color combiner.

Figure 23 is a schematic side view of a color printer.

Figure 24 is a schematic plan view of a three line liquid crystal display (LCD) shutter device.

Figure 25 is a schematic side view of a color projection device.

Figure 26 is a schematic plan view illustrating three matrices of a liquid crystal display (LCD) shutter. Alternatively, Figure 26 can schematically represent three matrices of light emitting diodes.

Figure 27 is a schematic isometric view of both a color imaging and a color projection device.

Figure 28 is a schematic side view of a color imaging device.

Figure 29 is a schematic plan view illustrating three matrices of photo detectors.

Figure 30 is a schematic side view of an electronic color filter device.

Figure 31 is a schematic side view of a multiple channel fiber optic communication device in accordance with an embodiment of the invention.

Figure 32 is a schematic representation of the use of three color lasers as an optical source.

Figure 33 is a schematic side view of another embodiment of the multiple channel fiber optic communication device.

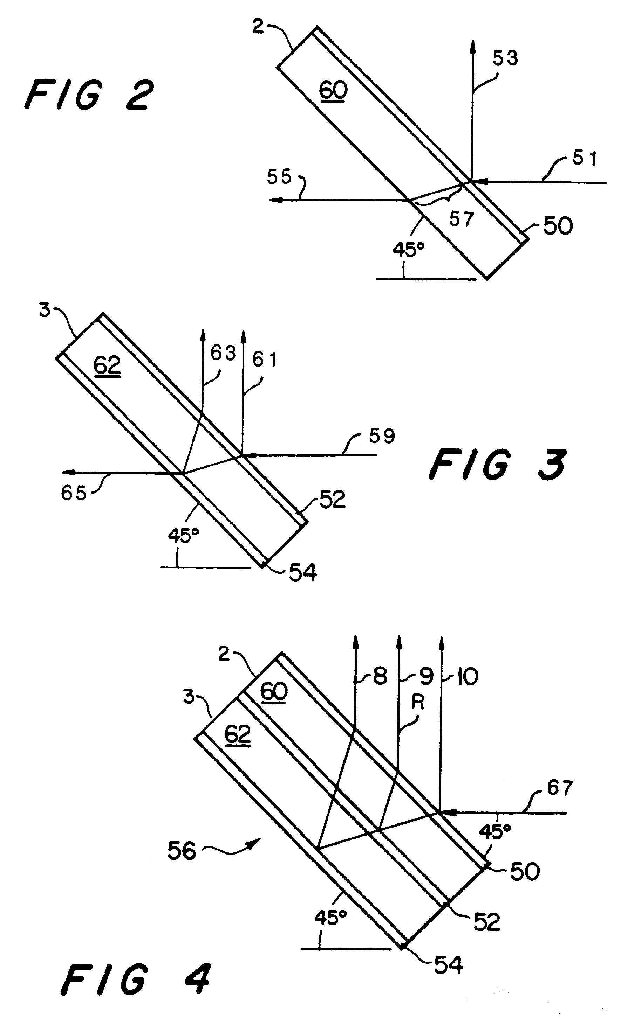

Figure 2 illustrates a single layer dichroic optical component that comprises a substantially transparent optical support medium 60, such as a glass plate, that is optically flat and a dichroic layer 50 that is deposited on one side of the glass plate 60. As shown in Figure 2, an input optical beam 51 is split into two spatially and spectrally separated optical beams 53 and 55. Dichroic layer 50 reflects optical radiation having a predetermined wavelength and transmits all other radiation along optical beam 55. Because the index of refraction of air is different than the index of refraction of glass, the portion 57 of optical beam 55 is refracted at a different angle through the glass plate 60.

Figure 3 illustrates the manner in which a glass plate 62 can be coated on two sides with two dichroic layers 52 and 54 to split an incoming beam 59 into three spatially and spectrally separated beams 61, 63, 65. Optical beams 61 and 63 are transmitted in parallel directions as a result of the parallel faces of substantially transparent optical support medium 62.

Figure 4 illustrates the manner in which two optically flat transparent optical support media 60 and 62 can be attached to provide three substantially equally spaced dichroic layers to produce three substantially parallel optical beams 8, 9, 10 that are both spatially and spectrally separated. In accordance with the present invention, precise spectral and spatial separation of a projected line image is achieved through composited dichroic beamsplitters, as shown in Figure 4. The optical separator 56 consists of precisely ground and polished glass plates 60 and 62 coated on one or both faces with dichroic coatings 50, 52, and 54. At each dichroic coating 50, 52, and 54, incident light is either reflected or transmitted according to wavelength with negligible absorption loss. The composition of the dichroic coatings 50, 52, and 54 can be designed for accurate bandpass filtration.

Dichroic coatings are well known in the art of optics. Dichroic coatings typically consist of 20 or more alternating high and low refractive index optical layers vacuum-deposited to an accumulative thickness of, typically, about one to three microns on a glass surface. The material composition and method of deposition can be designed for very accurate spectral bandpass filtration. A variety of dichroic filters, consisting of a single glass plate front surface coated with a dichroic coating, are commercially available from a variety of sources (e.g., Optical Coating Laboratory, Inc., located in Santa Rosa, California).

The plate 2, shown in Figure 4, is designed such that incident light striking dichroic coating 50 at 45 degrees reflects blue light (approximately 400 - 500 nm.) while transmitting red light and green light.

Plate 3, shown in Figure 4, is coated on both faces with dichroic coatings 52 and 54 such that incident light striking a first dichroic coating 52 at nominally 45 degree reflects the red spectral band (e.g., 600 - 700 nm.) while transmitting the green band. The green light striking a second dichroic coating 54 and having an optical axis oriented nominally 45 degrees from the dichroic coating is reflected. The reflected green light is caused to pass back through the glass plate 62 and through the other dichroic coatings 52 and 50 at a 45 degrees angle. As shown in Figure 4, each of the components 8, 9 and 10 of the incident light are reflected at 90 degrees to incoming beam 67. The reflected red and green components 9 and 8 are parallel and separated from each other by a distance determined by the glass plate 62 and dichroic coating thickness 54, the index of refraction of the plate 62, and the angle of incidence. Similarly, the blue and red components 10 and 9 are separated by a distance determined by the thickness of glass plate 60, dichroic coating 50, the index of refraction of the plate 60 and the angle of incidence.

A trichromatic separation of an incident light beam can be achieved through a composite of beamsplitter plates 2 and 3, as shown in Figure 4. Each of the three spectrally-tailored dichroic coatings 50, 52, and 54, are separated by the thickness of glass plates 60, 62. Incident light striking the first dichroic coating, and having, for example, an angle of incidence of 45 degrees from the dichroic coating, is filtered such that the blue spectral band is reflected. The unreflected bands (red and green) are transmitted to a second dichroic coating 52 located between the glass plates 60 and 62. Coating 52 reflects the red spectral band. The remaining band, i.e., the green spectral band, is reflected from the third dichroic coating 54. The red and green spectral components exit the composite beamsplitter 56 through the glass plates 60 and 62 and dichroic coatings 50 and 52, essentially unperturbed. Thus separated, red, green, and blue components of the incident light beam are reflected at 90 degrees to the principal incident beam with a parallel spatial separation which is solely determined by the thickness of the glass plates 60, 62, and dichroic coatings 50, 52, and 54, and the refractive indices thereof. The order in which the reflected color bands have been presented is by example only. It is further obvious that a mirror coating could be substituted for the third dichroic coating 54, since only the third remaining color component reaches that coating interface.

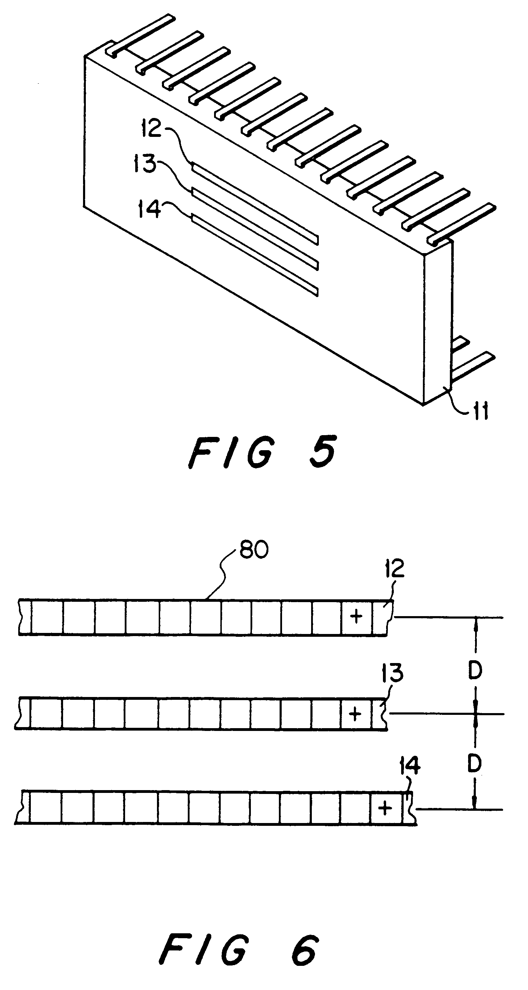

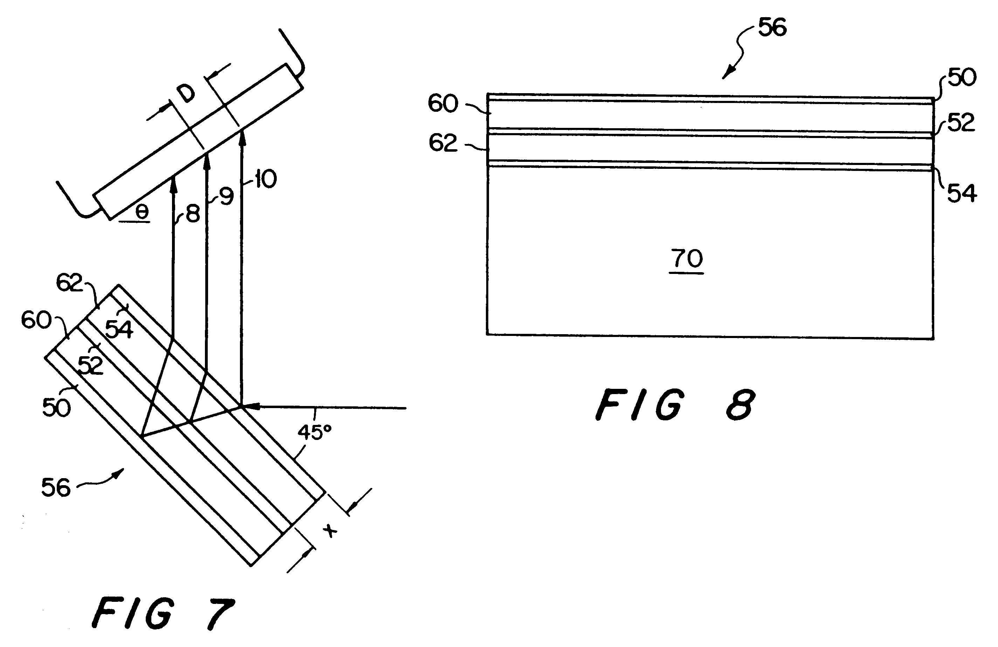

A suitable photosensor for use with this invention is shown in Figure 5. Photosensor 11 is preferably a single chip, single package solid state device having three linear photosensor arrays, 12, 13 and 14, precisely aligned and spaced to coincide with the focused line images 8, 9 and 10, respectively, shown in Figures 4 and 7. Such devices can be made using known technologies. For example, numerous photosensor array devices are now commercially available. Most prominent are photodiode arrays with charge-coupled shift registers (CCD photosensors). Such single line CCD photodiode array devices are commercially available from Fairchild Semiconductor, located in Palo Alto, California, Toshiba, located in Japan, and other companies. The photosensor array devices have commercial resolutions ranging from 128 to over 5000 photoelements per line. The spacing between photoelements typically ranges from 10 to 62 microns. Thus, the design and manufacture of a photodiode array shown in Figure 5 uses known technologies to produce the three parallel photosensor arrays 12, 13 and 14.

As illustrated in Figure 6, a distance "D" separates the photosensor arrays 12, 13, and 14. As shown in Figure 7, the distance "D" is related to the separation of the dichroic coatings 50, 52, and 54, and angle theta of the photosensor 11. The distance between photosensors 12 and 13 does not have to be equal to the distance between photosensors 13 and 14. The three photosensor arrays 12, 13, and 14 have common clock inputs for synchronization. As is well known in the art, integrated circuit photolithography processes are capable of aligning and spacing the three linear photosensor arrays 12, 13 and 14 to submicron precision. The combined spatial precision of the described trichromatic beamsplitter 56 and three photosensor array detectors, 12, 13 and 14, allows accurate coincidence of the detected images with the single line image of the original.

A trichromatic beamsplitter 56 and photosensor 11 are shown in an end view in Figure 7. Due to the variations in path-length-through-glass between the three separated color components, beamsplitter 56 and photosensor 11 are mounted to have an inclusive angle less than 90 degrees, typically 80 degrees for nominal glass refractive index. The inclusive angle is independent of the focal distance between the lens and photosensor. At the inclusive angle, the three separated color components will properly focus on each respective linear photosensor array 12, 13 and 14. The spatial separation of arrays 12, 13, and 14 is directly determined by the thickness of the glass plates 60 and 62, dichroic coatings 50, 52, and 54, and the refractive indexes of the optical support medium 60 and 62. (Standard lens formulas are used to calculate the angle and separation distances.) Trichromatic beamsplitter 56 and photosensor 11 are preferably assembled in a housing that maintains the desired angles and distances, and that consolidates the parts into a single package.

As is well known in optics, a focused light beam transmitted through a glass plate at an angle of incidence other than 90 degrees is subject to oblique spherical aberration. This causes astigmatism. Increasing glass thickness and angle of incidence exacerbate the astigmatism. The red, blue, and green spectral components experience different degrees of degradation due to their different path length through the glass and the high angle of incidence (45 degrees). This compromises the focus and resolution of the color separation technique to the extent that the chromatic foci through the trichromatic beamsplitter occur beyond the depth of focus provided by the imaging lens.

The thickness of the glass plates 60 and 62 and dichroic coatings 50, 52, and 54, and the spatial separation of the three photosensor arrays 12, 13, and 14, in photosensor 11 are collectively minimized to render negligible the otherwise optical deficiencies and minimize cost. Since thin glass plates (on the order of 0.1 to 0.2 millimeter) are difficult to grind and coat without substantial warpage, a preferred method of beamsplitter manufacture will include a thick glass substrate 70, shown in Figure 8, from which the trichromatic beamsplitter 56 is built up. In this preferred method, the thick glass substrate 70 is ground flat, polished and coated with dichroic coating 54. Glass plate 62 is bonded using an optical cement. The exposed surface of glass plate 62 is then ground flat and polished to provide the desired thickness of coating, cement and glass as measured through the composite. In a like manner, glass plate 62 is coated with dichroic coating 52, then bonded to glass plate 60, at which point the surface of plate 60 is ground and polished to the desired thickness. Finally, dichroic coating 50 is deposited on the exposed surface of plate 60. Using said fabrication method, trichromatic beamsplitter 56 can be manufactured from relatively large glass sheets from which many beamsplitters may be cut at minimum part cost.

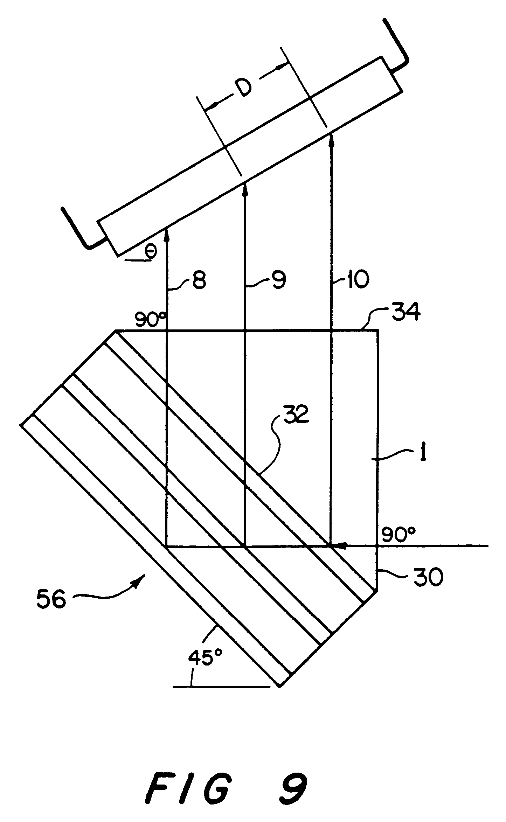

An alternate embodiment utilizes a single pair of beamsplitter plates and a single prism. As shown in Figure 9, the incident light beam is aligned to impinge a first base side 30 of right-angle prism 1 at a normal angle and transmit therein to the hypotenuse face 32 of the prism 1 which the light beam impinges at 45 degrees. The composite beamsplitter 56 of Figure 4, consisting of beamsplitters 2 and 3, is attached thereto. A trichromatic separation of the red, green and blue spectral components of the incident light beam occurs as previously described. The three reflected component beams re-enter the prism 1 and are directed toward the second base side 34 of the prism. The component beams exit the prism at 90 degrees to its base side 34 and with an optical axis spatial separation (SQRT 2)x where x is the thickness of the glass, optical cement and dichroic coating between two adjacent dichroic coatings. Irrespective of the lens used to focus through beamsplitter 56, the three component light beams will focus on a plane oriented at an angle theta = arctan 2 (n-1/n) to the second base side 34 of prism 1, where n is the refractive index of the glass prism 1 and beamsplitter plates (for n = 1.517, theta = 34.28 degrees). The three linear array photosensors 12, 13, and 14, as previously described, are aligned on said plane at angle theta at the location of foci of the three component beams. Trichromatic beamsplitter 56 with the prism 1 allows a 90 degree angle of incidence to glass and chromatic focusing to each sensor array 12, 13, and 14.

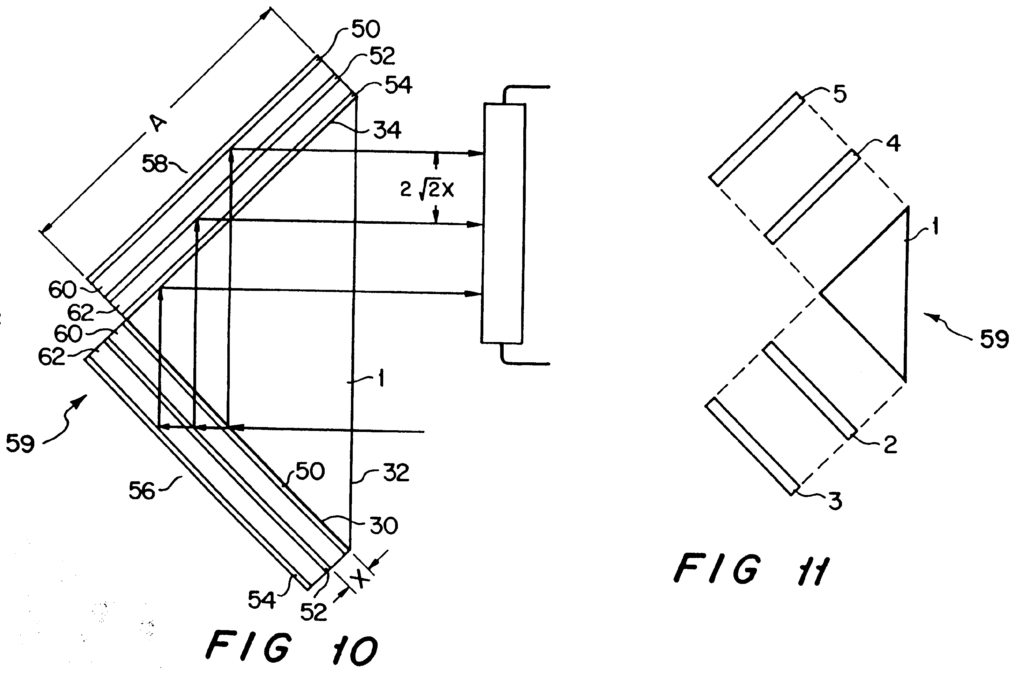

In order to align photosensor 11 to be perpendicular to the optical axes of the color-separated beams, the dual trichromatic beamsplitter with prism 59 shown in Figure 10 is adopted. In this embodiment, the path-lengths-through-glass of the color-separated beams are made equal by the reciprocal arrangement of the trichromatic beamsplitters 56 and 58.

As shown in Figure 10, the incident light beam is aligned to impinge the hypotenuse face 32 of right angle prism 1 at a normal angle and transmit therein to a first base side 30 of the prism 1 which the light beam impinges at 45 degrees. The composite beamsplitter 56 of Figure 4 is attached thereto. A trichromatic separation of the red, green and blue spectral components of the incident light beam occurs as previously described. The three reflected component beams re-enter the prism 1 and are directed toward the second base side 34 of prism 1, each separated beam impinging the second base side 34 at 45 degrees incidence. A second composite beamsplitter 58 is attached to the second base side 34 of prism 1. The plates 60 and 62 and the dichroic coatings 50, 52, and 54, in beamsplitters 56 and 58 are identical. However, the orientation of the composite beamsplitters 56 and 58, and the multilayer dielectric coatings 50, 52, and 54, on each base side 30 and 34 of the prism 1 are reversed so that the path lengths of each component color beam entering and exiting the trichromatic prism beamsplitter 59 are identical. That is, a component color beam, such as blue, reflects off the dichroic coating 50 on plate 60 located on base side 30. Next, the blue component reflects off the dichroic coating 50 on plate 60 located adjacent to base side 34. In a like manner, a red component color beam goes from middle filter 52 on base side 30 to middle filter 52 on base side 34, and the green component reflects off a backside filter 54 to a front side filter 54 as shown in Figure 10. Reflected beams from the trichromatic beamsplitter 58 adjacent to base side 34 are directed out of prism 1. The beams are perpendicular to the hypotenuse side 32 and parallel to the incident light beam. The thickness of the beamsplitter glass plates, 60 and 62, and the dichroic coatings 50, 52, and 54, determine the separation of the reflected beams. Thus, the dual trichromatic beamsplitter 59 provides an equal path length through the glass for all color components. Also, the light enters and leaves the prism at a normal angle of incidence.

An alternative trichromatic beamsplitter 59 could omit prism 1. Without the prism 1, incident light impinges the beamsplitter 56 and 58 at 45 degrees, creating astigmatic foci at the focal point of photosensor 11. The degree of effect due to the astigmatism is a function of the depth of focus of the projection lens in the accompanying optical system, the spatial separation of the various dichroic coatings composing the trichromatic beamsplitter and the angle of incidence of the beams. The primary advantage of such an alternative embodiment is the removal of glass in the optical path for which a lens must correct.

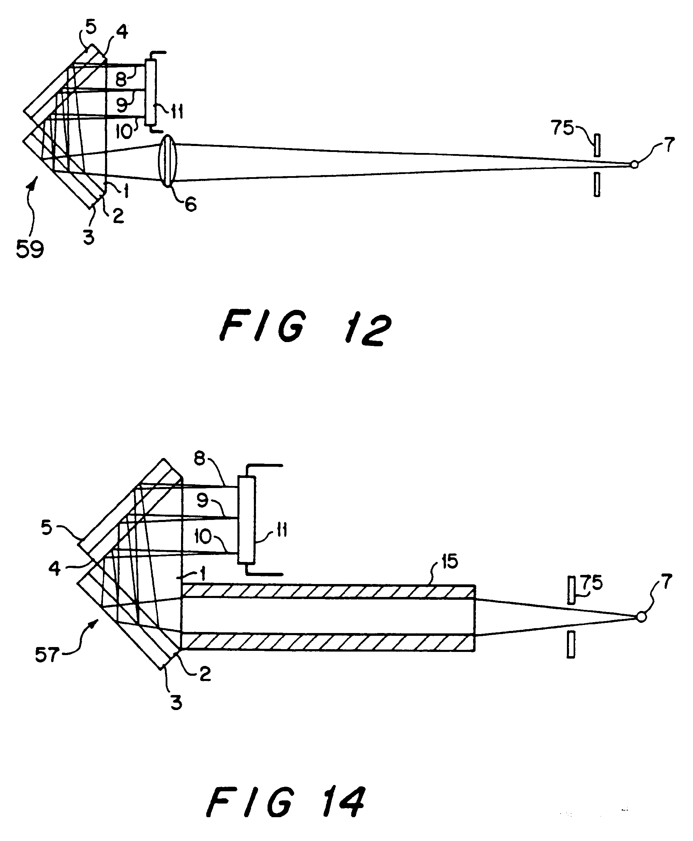

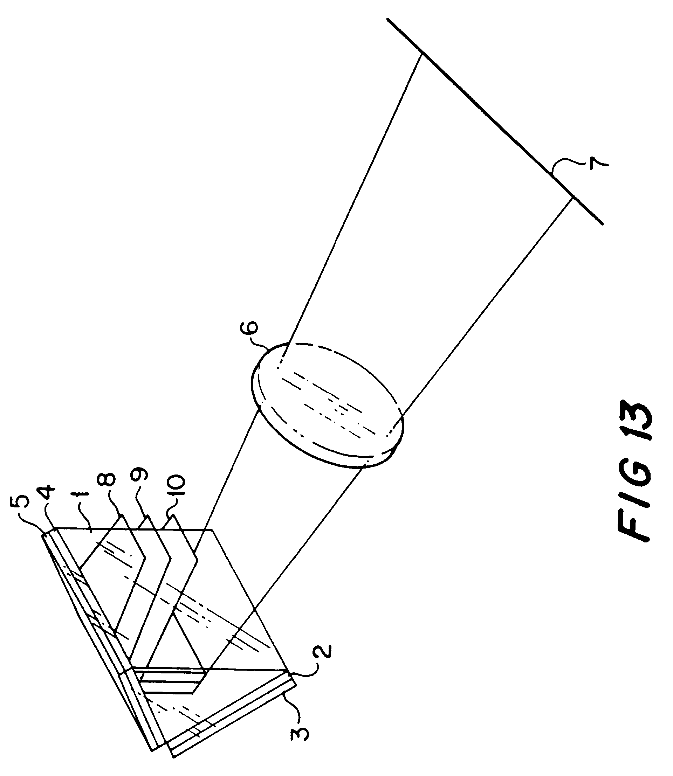

By way of example only, an optical system employing the trichromatic beamsplitter 59 of Figure 10 is shown in Figures 12 and 13. A similar optical system can be employed with the beamsplitters 56 and 58, and prismless beamsplitter 59, in Figures 7, 9 and 10, respectively, or a beamsplitter that separates an incident light beam into more than three spectral bands through the compositing of multiple beamsplitter plates. A line image 7 of an original object is projected through an aperture 75, as shown in Figure 12, by a lens 6 through the hypotenuse face of prism 1 such that the optical axis of the incident beam is normal to said face. Aperture 75 is constructed to block images from far away adjacent object lines about the principal object line 7 which would otherwise allow multiple separated images to strike the photosensors. The incident beam is separated into its three color components as previously described. The blue, red and green components emerge from the prism 1 as line images 8, 9 and 10, respectively. Since the individual path lengths of the color component beams through the beamsplitter 58 are identical, the said line images 8, 9 and 10 reside on a single plane which is perpendicular to the hypotenuse face of prism 1. The spatial separation of the three line images 8, 9 and 10, is determined by the glass plate spacing of the six dichroic coatings, 50, 52, and 54, on the beamsplitter plates 60 and 62. By carefully tolerancing the individual thicknesses of beamsplitter plates 60 and 62, the spatial separation of focused line images 8, 9 and 10 can be very accurately determined and maintained. This feature is particularly suited for trichromatic photo detection on said monolithic solid state photosensor 11 shown in Figure 12 and 5. Each line image, 8, 9 and 10, is electronically detected by one of three parallel spaced photosensors, 12, 13 and 14.

An assembly view of the described trichromatic beamsplitter 59 is shown in Figure 11. The four beamsplitter plates 2, 3, 4, and 5 are oriented about prism 1 as shown and secured together with optical cement according to standard practice. Said optical cement is selected to have matching refractive index with the glass. Typical optical cements are polyester or acrylic bases. In the assembly process it is important to minimize glue line thickness, preferably micron to submicron glue films, to minimize random variation in the spacing of the dichroic coatings on the beamsplitter plates. This is typically accomplished by the application of heat and pressure to the composite structure during the adhesive process.

Referring now to the beamsplitter dimensioning shown in Figure 10, assuming the dichroic coatings 50, 52, and 54 are separated by a distance X, the incurred separation of the three focus line images 8, 9 and 10, will be (SQRT 2) (2x). The separation of the dielectric optical filters, 50, 52 and 54, is dominated by the glass plate thickness (the filter 50, 52 and 54 thickness is typically 3 micrometer for standard dichroic coatings). Thus, the glass plate thickness principally determines the separation between image lines 8, 9 and 10. Variations in image lines 8, 9 and 10 separation are determined by variations in glass plate separation. For example, to maintain image lines 8, 9 and 10, a spacing tolerance of 7 microns (one-half of standard 13 micron photoelement) a glass plate thickness tolerance of 2.5 microns (0.0001 inch) is required. Such glass thickness accuracy is available using conventional grinding and polishing procedures and equipment.

The color component's path length through the trichromatic beamsplitter 59 is (2)^{1/2}A + 2(2)^{1/2}X where A is the dimension of a base side of prism 1, as shown in Figure 10. Reasonable small variations in the base and plate dimension can usually be handled by normal depth of focus characteristics of most lenses.

As previously indicated, the line images 8, 9 and 10 and photosensor arrays 12, 13, and 14 preferably have matched spacing. Thus, the spacing between photosensor arrays 12, 13, and 14 should be (SQRT 2) (2x) when the spacing between the dichroic coatings 50, 52 and 54 is x in beamsplitter 59 as shown in Figure 10. Thus, an array spacing of 1.0 mm required a beamsplitter plate 60 and 62, thickness of 0.35 mm. for beamsplitter 59. Under normal conditions, dichroic coatings 50, 52, and 54, applied to glass plates of such small thickness will cause a mild bowing of the glass plate. During assembly of beamsplitter 59, however, the bow can be removed by the plate's adherence and conformity to the rigid flat surface of the prism 1. Reasonable minimum array spacings for CCD photodiode arrays are about 0.2 to 0.3. Such minimum spacings dictate beamsplitter plates 60 and 62, on the order of 0.07 to 0.2 mm. thick, depending on the beamsplitter embodiment utilized. To achieve these dimensions in manufacture, the previously described fabrication technique of Figure 8 is recommended. It is obvious that this technique is applicable to all of the aforementioned trichromatic beamsplitter embodiments.

The profile view of Figure 12, has the appearance of a "projection" imaging apparatus. That is, a relatively long object line 7 is projected into smaller image lines 8, 9 and 10 via lens 6. In such a system, the photoelements 80 shown in Figure 6 in the photosensor arrays 12, 13 and 14 must be proportionately smaller than the desired scanning resolution of the original. The advantages of such a "projection" type scanning device is the use of a small photosensor arrays 12, 13 and 14.

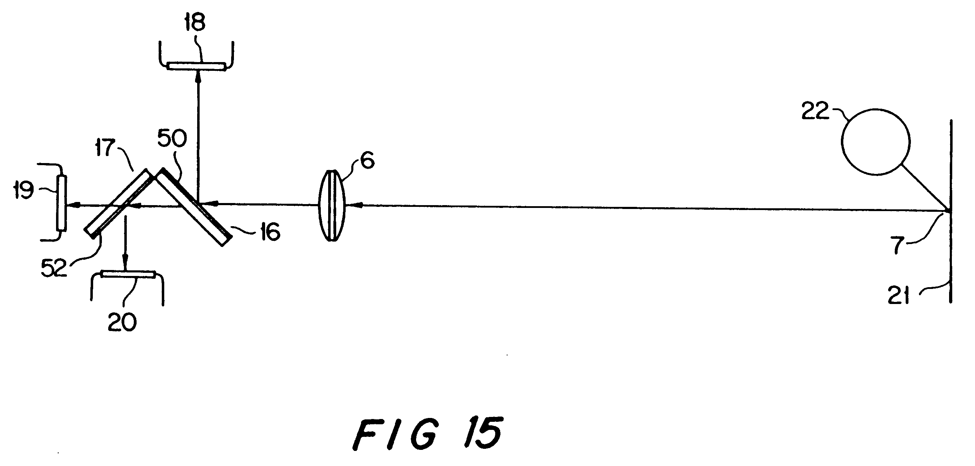

The present invention is not limited to "projection" optics and, in fact, is quite extensible into other product and application forms. In particular, the present trichromatic beamsplitter 59 and three linear array photosensor 11 can be packaged with a fiber array lens 15 to produce a "contact" type scan head 57, shown in Figure 14. "Contact" type scan heads 57 principally use lenses with unity magnification. As such, the lens and sensor can be compacted in close proximity to the original. (The scan head does not actually contact the original as the name would imply.)

Fiber array lenses 15 are well known in the imaging field and are a product of Nippon Sheet Glass (Japan) under the name SelFoc Lens. The fiber array lenses 15 are available in small and long length such as page width. The fiber array lenses 15 are made of glass fibers of given length. Each fiber acts as an individual lens since chemical treatment varies the refractive index as a function of its radius. In this instance, the lens array 15 projects the line image of an original 7 through the trichromatic beamsplitter 59 to three linear array sensor 11. The length of the lens array 15, beamsplitter 59 (or other previously described beamsplitter embodiment) and photosensor 11, as it moves into the page in Figure 14, is determined by the application: relatively long lengths for page width scanning (e.g., 21.6 cm (8.5 inches) long) or short lengths for "traversing" type scanning in which the scan head 57 is caused to traverse back and forth over the original object by an external mechanism. For equivalent scanning resolution, the contact (unity magnification) type scan head 57 shown in Figure 14 requires proportionately less stringent tolerance on beamsplitter plates 2, 3, 4 and 5 thickness in comparison to the projection type scanner shown in Figures 12 and 13. On the other hand, for equivalent scan width, the contact scanner 57 must be proportionately longer as measured by the ratio of the lens magnifications, unless the scan head 57 is traversed across the original.

A significant advantage of dichroic coatings 50, 52 and 54 over other filtration techniques is design versatility with respect to bandpass wavelengths and the slope and crossover characteristics of the band pass. Very sharp step function bandpass as well as controlled slope crossover with adjacent color bands is controller by a number of layers, material type, and coating layer thicknesses in a given filter. In the visible spectrum very clean bandpass discrimination can be achieved between red, green and blue or cyan, magenta and yellow. By contrast, conventional organic dye filters, as used in the prior art, are typically not as well-defined and usually have close band or multiple band filtration characteristics which ultimately prevents accurate color separation, usually due to undersaturation of a given detected trichromatic color.

The teachings of the present invention have been principally applied to color document scanning. Scanned document images, in this instance, are displayed on a color monitor. The accuracy of the color separation is judged by the likeness of the displayed image colors to that of the original document. To obtain color fidelity, the color separation must match the spectral characteristics of the individual red, green and blue phosphorus in the monitor display screen. This was successfully achieved by using dichroic beamsplitters 16 and 17 and a phosphor-tailored fluorescent lamp 22 in a test apparatus, depicted in Figure 15. The test apparatus utilizes three single linear array CCD photosensor 18, 19 and 20 (Toshiba TCD 102C-1) with a 2048 element array.

Referring to Figure 15, a fluorescent light source 22 illuminates the surface of an original document 21. A line image of the original seven is projected onto a beamsplitter assembly, consisting of dichroic beamsplitters 16 and 17, by lens 6. Beamsplitters 16 and 17 are flat glass plates coated on one side with dichroic coatings 50 and 52, respectively. Beamsplitter 16 is designed to reflect blue light while transmitting red and green spectral bands. The blue light is reflected to a first CCD linear-array photosensor 18, with beamsplitter 16 tilted at 45 degrees to the incident light beam. Beamsplitter 17 reflects red light to a second CCD photodiode array sensor 20. The beamsplitter plates are Optical Coating Lab commercial blue and red 45 degrees Dichroic Color Separation Filters. The green line image passing through both beamsplitter plates is captured by the third CCD photodiode array sensor 19. Beamsplitter plate 17 is also aligned at 45 degrees, as shown.

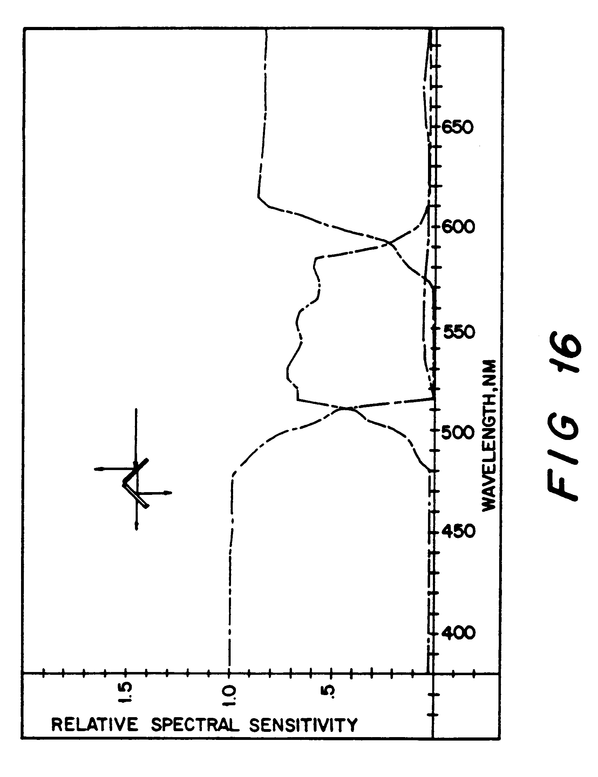

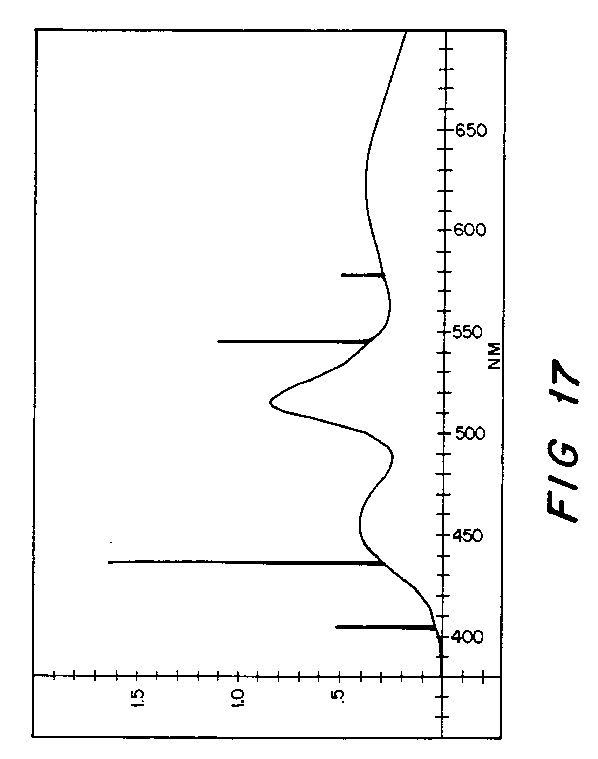

The band pass characteristics of the collective beamsplitter assembly of Figure 15 is shown in Figure 16. Although the crossover wavelengths between color bands is clean and spectrally accurate for separation, the reflected bands do not share the spectral shape and balance of the output device's color palette. Output devices include monitors and hard copy devices. Spectral accuracy, in this case, is most easily provided by spectrally tailoring the light source 22. Fluorescent lamp phosphors can be blended to achieve a wide variety of spectra. The spectral bandpass characteristics of the dichroic coatings 50 and 52, can be used to choose phosphors of the lamp 22 so that the color separation of the coatings 50 and 52, will match the monitor's display phosphors. The result of the HP Color Model study was a lamp specification used by Sylvania Lamp to prototype a scanner lamp source 22. The prescribed phosphor recipe (from Hewlett-Packard Company) and the spectra of the prototype lamp, as made and measured by Sylvania, is shown in Figure 17.

The spectra of the spectrally-tailored fluorescent lamp as separated by the dichroic beamsplitters 16 and 17 and detected by CCD photodiode arrays 18, 19 and 20, produce a color gamut nearly equivalent to standard monitor phosphor output.

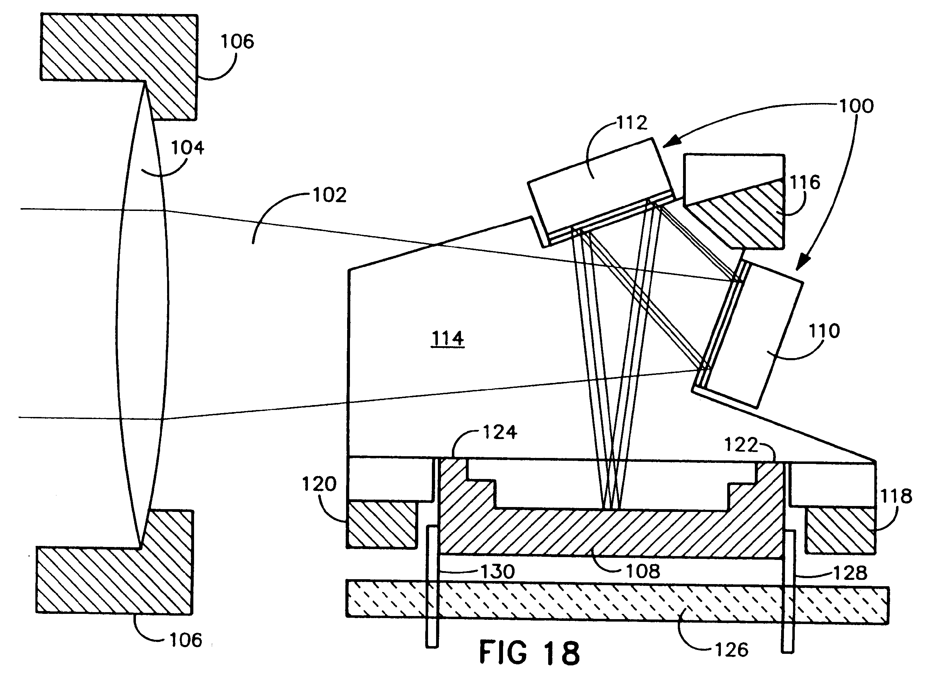

Figure 18 is a schematic diagram showing a cut away view of the optical component 100 employed as a trichromatic beamsplitter device. As shown in Figure 18, an input beam 102 is focused by a lens 104 which is held by a lens holder 106 capable of focusing the lens very precisely on the detector surface of the three line CCD array 108. Input beam 102 impinges upon the optical surfaces of the optical separator 100 and is separated into three predetermined colors to form three optical beams having predetermined spectral ranges that are carefully selected by the dichroic layers placed on the optical surfaces of the optical separator 100. As shown on Figure 18, the first dichroic layer device 110 is disposed such that the angle of incidence of the optical axes of input beam 102 is approximately 22.5 degrees. Input beam 102 is then SPlIt into three spatially and spectrally separated beams that are transmitted to a second dichroic layer device 112 which is also disposed at approximately 22.5 degrees to the optical axes of each of the spatially and spectrally separated optical beams. The second dichroic layer device 112 is normally constructed in the same manner as the first dichroic layer device 110 so that the three separate optical beams that are transmitted from the second dichroic layer device have equal optical path lengths to a predetermined image plane. As shown in Figure 18, the detector device 108 is disposed on the image plane that is substantially normal to the optical axis of input beam 102. Each of the three spatially and spectrally separated optical beams is focused on a separate line detector array on detector 108 so that a line scan of, for example, a document, results in each of the colors from the line scan being detected simultaneously on the detector surface of detector 108 as a result of the equal optical path lengths of each of the individual spectrally separated beams. The dichroic layer devices 110 and 112 are precisely held in the positions illustrated by a mounting device 114 that includes arm support structures 116, 118 and 120 that extend between two side portions. The support structure 114 is open in the central portions to allow light to be transmitted to the optical component 100 and subsequently to detector 108. Detector 108 is also precisely located in the mounting device 114 by way of interface surfaces 122 and 124. Signals derived from detector 108 are fed directly to circuit board 126 via connectors 128 and 130 that comprise a plurality of connectors.

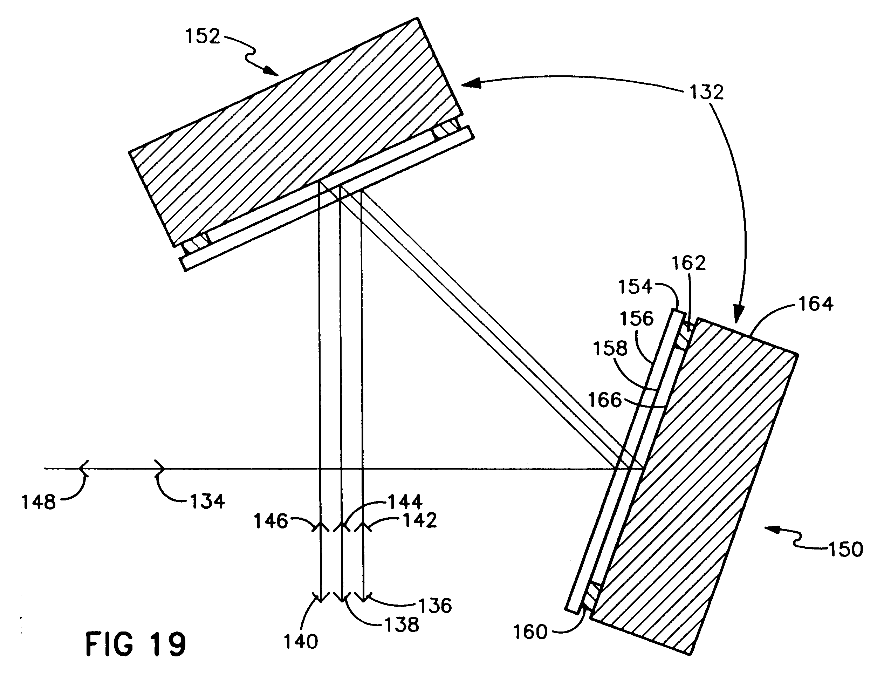

Figure 19 illustrates an alternative manner in which the optical component can be constructed and utilized. As shown in Figure 19, the optical component 132 can be used to separate an input beam 134 into three separate spatially and spectrally separated beams 136, 138 and 140. Alternatively, the optical component 132 can be used to combine three spatially and spectrally separated input beams 142, 144, and 146, into a single combined output beam 148 that spectrally and spatially combines each of the input beams such that each optical axes of the input beams 142, 144 and 146, are coincident as shown by output beam 148. Of course, all of the optical devices illustrated and described herein can be used in this manner as an optical combiner as long as the optical axes of each of the spatially and spectrally beams is aligned properly with the optical component, such as optical component 132.

Figure 19 also illustrates the manner in which each of the dichroic layer devices 150 and 152 can be constructed. As illustrated in Figure 19, dichroic layer devices 150 comprises a substantially transparent optical support medium 154 that is coated on both sides with dichroic layers 156 and 158. The substantially transparent optical support medium 154 is supported by spacers 160 and 162, that are attached to a substrate device 164 having either a totally reflective surface 166, or a surface coated with another dichroic layer to provide a specified spectral range to be reflected from surface 166. The space between the surface 166 and the dichroic layer 158 can comprise an air gap or can be filled with an optically transparent medium or can be evacuated, depending upon the application of the optical component 132. As shown in Figure 19, the optically transparent support medium 154 can comprise a glass plate that has a higher refractive index in the surrounding air, causing the individual optical beams to be refracted at different angles. Since the optical surfaces are reversed in dichroic layer device 152, the optical path lengths are adjusted so that they are equal in length to a plane that is substantially normal to the optical axes of each of the individual beams. Of course, the same is true whether the optical component 132 is being used as a color separator or color combiner. The difference in the refractive index of the glass plate versus the air gap does not cause a change in optical path lengths due to the fact that the surfaces from which the beams are reflected is reversed on the subsequent dichroic layer device as long as the glass plate has an air equivalent path length of the air gap.

As illustrated in both Figures 18 and 19, the angle of incidence is approximately 22.5 degrees for each of the dichroic layer devices. The low angle of incidence and the very small plate size that is used in many applications results in minimal astigmatism so that more expensive optical prisms can be eliminated without noticeable degradation of optical quality.

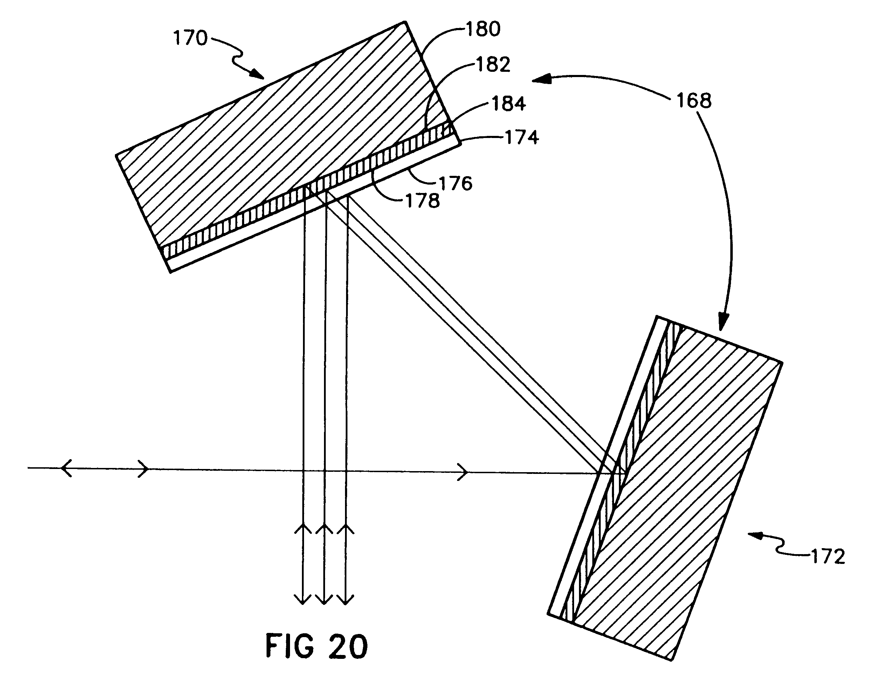

Figure 20 illustrates an optical component 168 that can be constructed in an alternative manner. Optical component 168 can comprise first and second dichroic layer devices 170 and 172, that can be used for either spectrally and spatially combining or separating optical beams. As shown, dichroic layer device 170 has a substantially transparent optical support medium 174 that has dichroic layers 176 and 178 disposed on two substantially flat sides. The substantially optically transparent support medium 174 is attached to a substrate 180 having either a totally reflective surface 182, or a surface coated with another dichroic layer to provide a specified spectral range to be reflected from surface 166 by way of an optical glue 184 that is capable of transmitting substantially all optical radiation. The optical glue, such as previously disclosed above, can have an index of refraction that closely matches the optically transparent support medium 174 to prevent a change in the angle of refraction within the dichroic layer device 170. As mentioned previously, the optical transparent support medium 174, for many applications, must be very thin to produce the desired spacing between the beams. Coating of the dichroic layers 176 and 178 on the glass plates 174 may result in a bending or warpage of the optical transparent support medium 174. However, substrate 180 has sufficient thickness to prevent warpage and has a substantially flat reflective surface 182 to which the optical transparent support medium 174 can be attached by way of the optically transparent glue 184. Proper attachment of the optical transparent support medium 174 to the substantially flat reflective surface 182 can provide sufficient support to maintain a substantially flat surface on optical transparent support medium 174. Of course, the thinner the glue layer is between optical transparent support medium 174 and the substantially flat reflective surface 182, the stiffer the glue line becomes which, in turn, further restricts relative movement. To provide even additional support, a glass plate with a thin layer of adhesive on both sides can be used in place of the optical glue 184. Again, dichroic layer device 172 would typically be constructed in the same manner as dichroic layer device 170 to simplify the overall optical component 168.

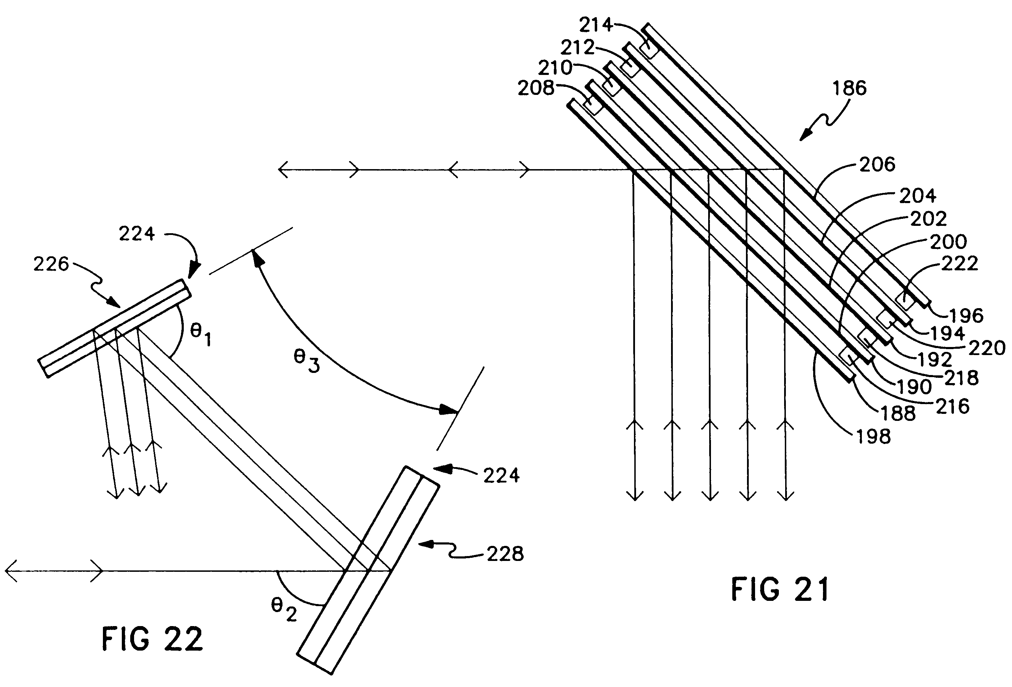

Figure 21 illustrates an alternative manner of constructing a dichroic layer device 186. Again, Figure 21 illustrates that the dichroic layer device 186 can be used either as a beam splitter or a beam combiner. Additionally, only one composite dichroic component 186 is illustrated, although additional composite dichroic component devices can certainly be utilized to equalize optical path lengths and direct the optical beams to different locations.

Figure 21 also illustrates that a plurality of optical transparent support media 188, 190, 192, 194, and 196, can be used to either separate or combine a plurality of beams. Of course, any number of beams can be combined or separated using the techniques of the present invention. As shown in Figure 21, each of the optically transparent support medium 188, 190, 192, 194, and 196, have dichroic layers 198, 200, 202, 204, and 206, disposed on its front layer. Spacers 208, 210, 212, 214, 216, 218, 220 and 222, support and separate each of the optically transparent support media 188, 190, 192, 194, and 196. Where large separation of the individual spectral beams occurs or is desired, the dichroic layer device 186 illustrated in Figure 21 is ideally suited. The spacing provided by spacers 208, 210, 212, 214, 216, 218, 220 and 222, can be varied to account for the increased thickness such as the increased glass thickness of each of the optical transparent support media 188, 190, 192, 194, and 196, as the beam is transmitted through the dichroic layer device 186 to insure proper alignment of each of the individual spectral beams. Of course, optical glues, angles of incidence, plate thicknesses, use of prisms and other techniques, such as described herein, can be used in any of the devices shown, to reduce the effects of astigmatism and prevent other possible problems. Of course, it should be understood that any manner of supporting and separating substantially parallel dichroic planes can be used in addition to the glass plates, glue layers, spacers, etc., disclosed herein. The method of support and separation of a plurality of dichroic planes is secondary to the primary invention disclosed herein which comprises the use of a plurality of dichroic planes disposed at an angle to the optical beams for either spatially and spectrally combining or separating the beams. Additionally, the last optical transparent support medium 196 can be replaced with a totally reflective surface as described above.

Figure 22 illustrates other implementations of the optical component 224. As illustrated in Figure 22, the spacing of the dichroic layer devices 226 and 228 can be changed as well as the angles of impingement, Theta One and Theta Two of the optical beams with the dichroic layers devices 226 and 228, respectively. Additionally, the total included angle theta three can also be varied to direct the optical beams to a predetermined plane. It is possible to maintain equal optical path lengths as well as vary the spacing between the optical axes of each of the individual spectral beams by varying both the angle of impingement and the plate thicknesses. As mentioned previously, the materials utilized in the dichroic layers devices 226, 228 can also be different to change the index of refraction as well as the path length of the optical beams within the dichroic layer devices to provide an additional manner of adjusting the optical component 224. For the purposes of simplicity, Figure 22, as well as other drawings disclosed herein, have been drawn without the angles of refraction illustrated.

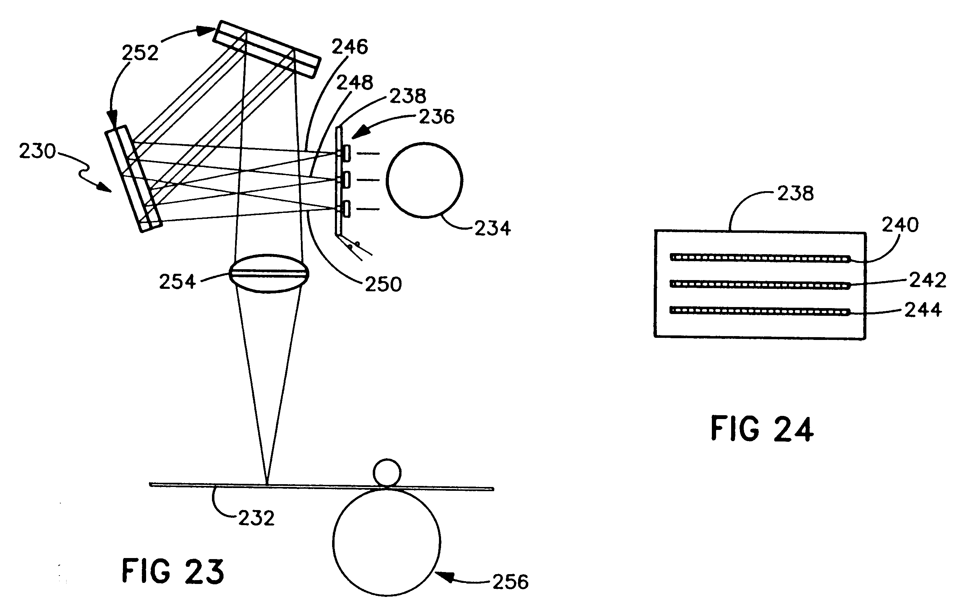

Figure 23 is a schematic side view of a color imaging device 230 that generates a color image on a recording medium 232 located on an image plane. As illustrated in Figure 23, an illumination source 234 provides a source of white light which is filtered by filters 236 to provide three separate color beams that have predetermined spectral ranges and function as three separate sources of illumination. The color filters 236 are located adjacent to a liquid crystal display (LCD) device 238 that is further illustrated in Figure 24.

Referring to Figure 24, the liquid crystal display device 238 has three linear arrays 240, 242, 244 of liquid crystal display shutters that are capable of transmitting light on a continuously variable gray scale from essentially a total throughput level to approximately opaque in response to an electrical control signal. A resolution of approximately 1000 elements per inch can be obtained in LCD arrays, such as illustrated in Figure 24. As a means of comparison, fine grain film may typically have a range of resolution of 600 to 800 line pairs per inch. Hence, a very high resolution can be obtained using LCD shutters. LCD shutters are available through several manufacturers including Epson Corporation and Sharp Corporation in Japan.

Referring again to Figure 23, the three optical beams 246, 248, and 250, that are transmitted from LCD shutter 238 have been adjusted in intensity to represent the color intensity of a single line of information to be recorded on recording medium 232 in accordance with the image information provided by the control signal. Optical beams 246, 248, and 250, are directed through optical component 252, which can comprise any of the optical components disclosed herein, and are focused by lens 254 onto the recording media 232. As illustrated, the three separate lines of information provided by each of the line matrices 240, 242 and 244 (Figure 24), is combined into a single beam having coincident optical axes such that each pixel element comprises a combination of the three primary colors from each of the optical beams 246, 248 and 250. This results in very high convergence and line acuity that is not possible using other techniques. For example, one method that has been contemplated for recording documents in this manner utilizes a CRT color monitor that is focused on a recording document with each of the colors sequentially exposed on the recording media. Not only does this technique require three separate exposures of the recording media, which is expensive and time consuming, line acuity and convergence are extremely low because of the triad of colors that are required in CRT color monitors.

The recording media 232 of Figure 23 can comprise a wide range of recording media. For example, the present invention could be used for presentation graphics by using a special color exposure paper available from Mead Company. The Mead paper is coated such that, when it is exposed to light, it changes chemically. The paper is then run through a roller which crushes the chemically altered coating to produce a color print. Additionally, recording medium 232 can comprise photographic film or any other recording medium capable of recording optical radiation, including non-visible radiation. Rollers 256 function to advance the recording medium 232 and can be driven continuously or in a step fashion using a stepping motor to correspond to the manner in which the control signal is applied to LCD shutter device 238. Alternatively, LCD shutter device 238 can comprise three arrays of light emitting diodes (LEDs) that produce three different spectra of light in response to a control signal. In that case, the illumination source 234 and filters 236 can be eliminated.

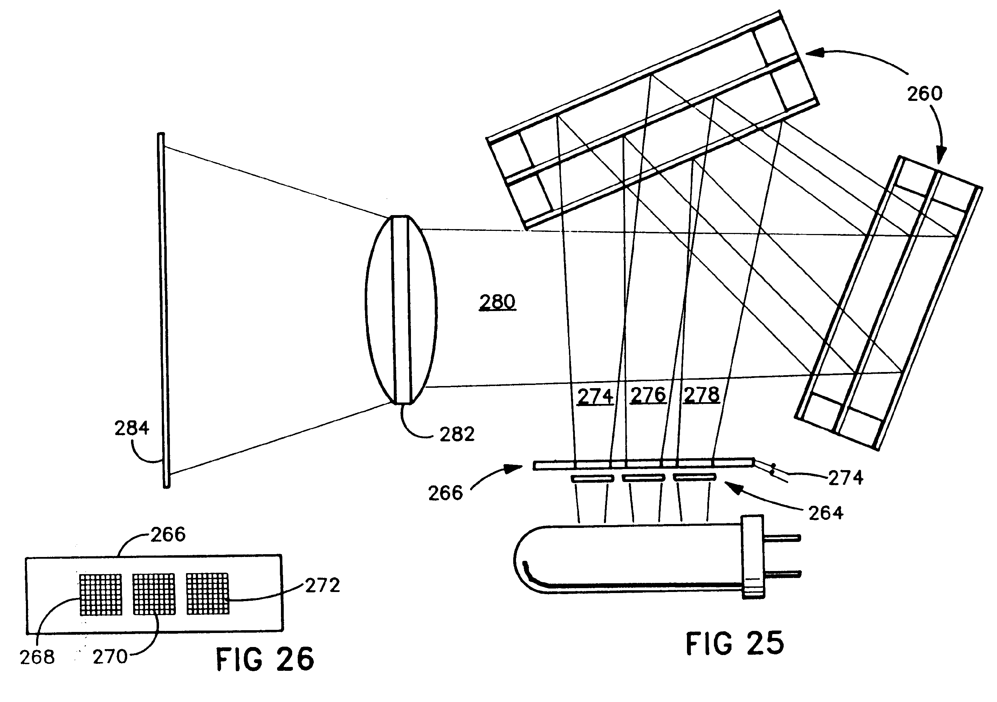

Figure 25 is a schematic side view of a projection device using the optical component 260. As illustrated in Figure 25, the optical component 260 is constructed in a manner similar to optical component 186 illustrated in Figure 21 but can comprise any of the implementations of the optical component. As mentioned previously, the spacing between the glass plates can be adjusted for the refraction produced in the glass plates. For example, if the angle of incidence is 22.5 degrees, as schematically illustrated in Figure 25, the angle of the beam within the glass plate changes to approximately 14.61 degrees for glass. To account for added glass thickness, each of the spacers must provide additional space for subsequently deeper layers in the optical component 260. Of course, the advantage of the spaced plate optical component 260, illustrated in Figure 25, and optical component 186, illustrated in Figure 1, is that as long as the glass plates are thick enough to provide an optically flat surface without warpage, the spacers provide automatic alignment of the glass plates to an accuracy of approximately two microns.

Figure 25 illustrates a two-dimensional projection device in which an optical source 262 produces white light that is filtered by color filters 264 which each project a different spectral range of frequencies. Each of these filters 264 has a two dimensional surface that overlays the LCD matrixes 266. LCD matrixes 266 are also illustrated in Figure 26. LCD matrixes 266 comprise three individual matrix arrays 268, 270 and 272, which are individually controlled by a control signal schematically illustrated by contacts 274, to provide an image for each separate color of the three primary colors. Of course, any number of matrixes can be used to provide any number of colors desired, although, only the three primary colors are necessary to provide a full color display. Each LCD matrix display is capable of transmitting a pre-determined amount of radiation of each spectral band at each spatial location of each individual matrix element in a continuously variable fashion that is controlled by the image control signal 274. The LCD matrices act as light shutters and are deposited using photolithography deposition precision that allows for very high resolution images. Additionally, they can be deposited on a monolithic substrate which allows the matrices to be aligned with the optical beams very easily, provides a very uniform electrical responsivity across each matrix, as well as between different colors (different matrices), and is easy and inexpensive to manufacture. The three two-dimensional beams are precisely combined in the optical component 260 so that each of the optical beams 274, 276 and 278, has an equal optical path length. The single spectrally and spatially combined beam 280 is then focused by lens 282 on a projection screen 284 which can be designed for viewing either from the front or back sides. Lens 282 is schematic in nature and most likely will comprise at least a two element lens for projection onto screen 284.

An advantage of the projection device illustrated in Figure 25 is that each pixel element is a super-imposition of each of the three colors. In other words, each pixel is a color composite of all three colors. This differs significantly from typical color CRT screens wherein each pixel is a separate color that the eye optically integrates into a single combined color pixel. A much sharper image is produced since there is a convergence of all three colors in each pixel element. Furthermore, typical color CRT screens require a shadow mask to separate each individual color pixel. As there is complete color convergence of each pixel, shadow masks are not necessary and much greater picture clarity can be obtained. Most importantly, the projection device does not produce the harmful X-rays that are produced by CRTs.

Alternatively, the device of Figure 25 can be used as a projection device for projecting an image on a recording medium. In other words, projection screen 284 can comprise a recording medium rather than a projection screen so that images can be recorded in both dimensions simultaneously rather than in a single dimension in a serial fashion such as is illustrated in Figure 23. Moreover, the LCD matrix 266 can be replaced by a series of light emitting diode matrixes such that the filters 264 and illumination source 262 can be eliminated. In this case, each LED matrix 268, 270 and 272, would produce a different spectral range of frequencies.

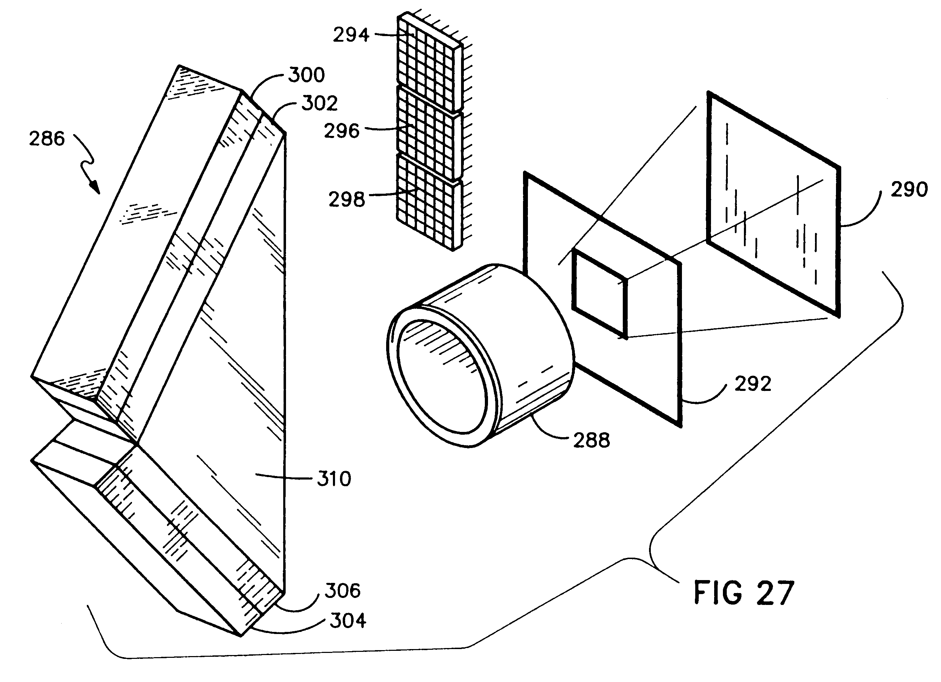

Figure 27 is a schematic isometric view of an implementation of the optical component 286 employed as a two dimensional color optical component system that could be employed, for example, in a color camera. As illustrated in Figure 27, lens 288 focuses an image from an object plane 290 through an aperture device 292 that determines the field of view of the color camera device illustrated in Figure 27. The image from the object plane 290 is focused onto an image plane on which three matrixes of detectors 294, 296, and 298, are disposed to detect the individual color beams that are separated by optical component 286. Optical component 286 is shown constructed as a prism 310 having optical spacer plates 300, 302, 304, and 306 attached thereto. Of course, any of the optical component devices disclosed herein can be used in place of optical component 286, illustrated in Figure 27, depending upon the precision and expense desired. A clear advantage of the implementation of the present invention illustrated in Figure 27 is that each of the detector matrixes 294, 296, and 298, can be located in the same plane and adjacent to each other so that they can be constructed on a monolithic substrate. This eliminates many alignment problems that are associated with standard prior art dichroic prism devices and provides a uniform output so that each color intensity need not be individually adjusted for each use or during the course of use of the camera. Because each of the matrixes of detectors 294, 296, and 298, are located on the same substrate, nearly uniform temperature gradient provides for nearly identical variations in output intensity of the signals from the detectors.

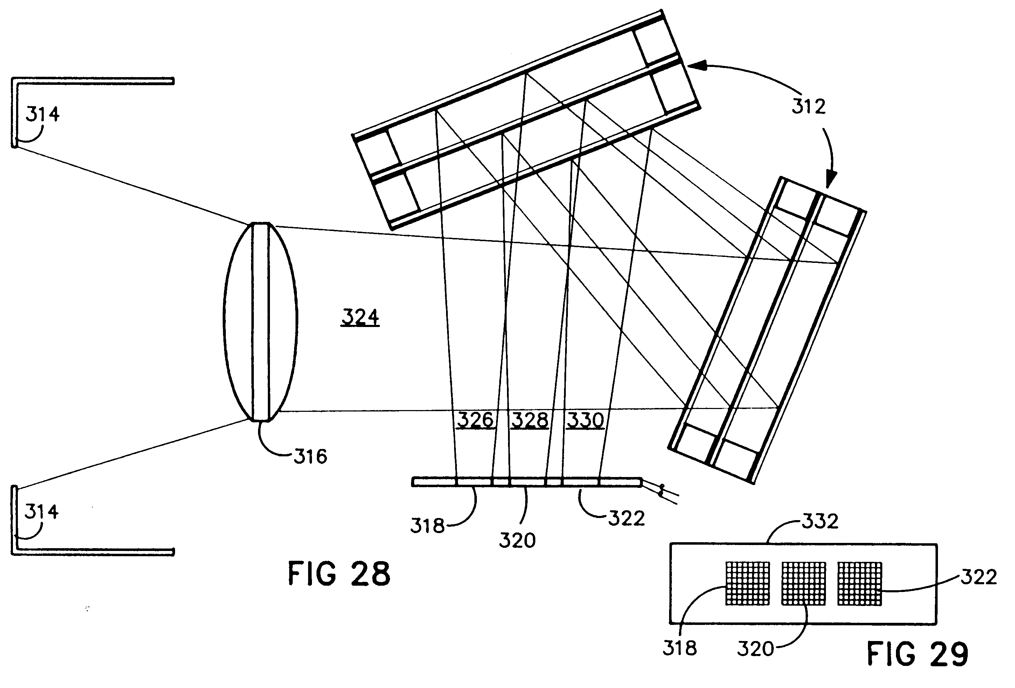

Figure 28 comprises a schematic side view of a color camera device, such as illustrated in Figure 27, that uses the spaced plate implementation, such as illustrated in Figure 21 and Figure 25, for the optical component 312. As illustrated in Figure 28, an aperture device 314 restricts the field of view of an image that is focused by lens 316 onto the three matrix detector 318, 320, and 322. Optical components 312 split the single optical beam 324 into three separate color beams 326, 328, and 330, having equal optical path lengths, in the manner described previously.

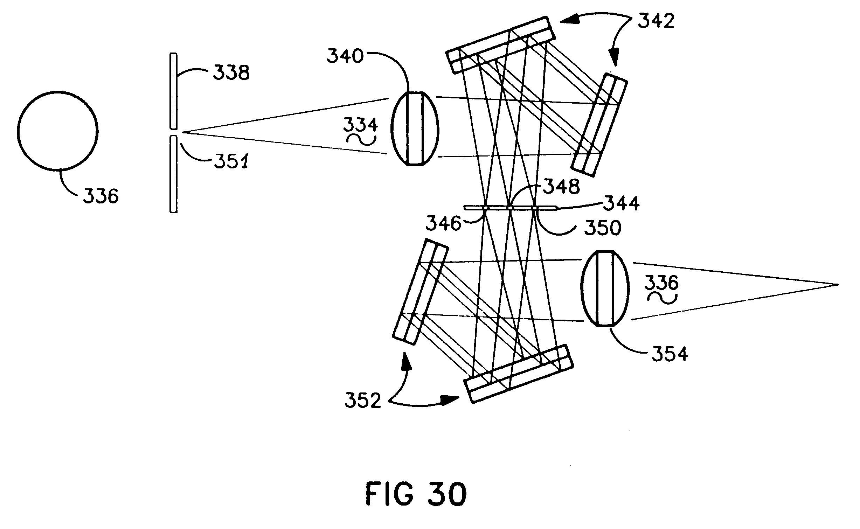

Figure 29 illustrates the three matrix detector 318, 320, and 322 that are mounted on a monolithic substrate 332 to provide a uniform color output signal.

Figure 30 illustrates an electronic colored filter device for filtering an input optical beam 334 produced by an illumination source 336 that is imaged through a pinhole or line aperture 351 in an aperture plate 338 to form a filtered output optical beam 336. Input optical beam 334 is focused by lens 340 through the spectral beam splitter 342 onto an aperture plane 344 on which a number of aperture devices, such as LCD shutters 346, 348, and 350, are disposed to vary the throughput of light in response to an electrical control signal. LCD shutters 346, 348, and 350, can comprise either single pinhole apertures or can comprise a linear array depending upon whether aperture 351 comprises a pinhole aperture or a line aperture. The resultant beams that are projected through the LCD shutters 346, 348, and 350, have an intensity that is adjusted by the electrical control signal that controls the opacity of the LCD shutter devices. These beams are then precisely combined by spectral combiner 352 and focused by lens 354 to produce the single combined output beam 336 that is both spatially and spectrally combined and adjusted in spectral content in accordance with the electronic control signal. Again, any number of color beams can be produced in the device illustrated in Figure 30 together with a corresponding number of shutter devices to provide additional control of the spectral content of output beam 336. Also, any type of shutter device can be used in place of the LCD shutters 346, 348, and 350. Additionally, the individual spectral beams can be produced in any desired manner and it is not necessary that the beamsplitter 342 be employed.

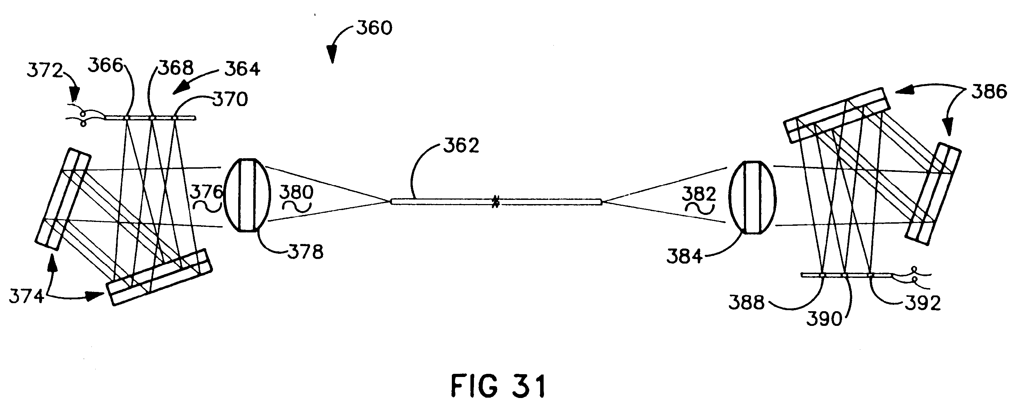

Figure 31 shows an embodiment of the invention and is a schematic side view of a multiple channel fiber optic communication device 360. Fiber optic communication devices allow transmission of high bandwidth information across a fiber optic such as fiber optic 362. This allows for high frequency modulation of an optical source such as laser diode. Laser diodes can be switched in the megahertz frequency range. However, the demodulated signal at the receiving end constitutes a single station signal since only one carrier frequency is transmitted through the fiber optic.

The present invention, as disclosed in Figure 31, overcomes these disadvantages and limitations by providing multiple carrier signals in the form of plurality of spatially and spectrally separated beams that have been combined into a single combined beam. As illustrated in Figure 31, an optical generator 364 contains a plurality of individual and spatially separated optical generators 366, 368, and 370, each having a different spectral range. Each of the individual optical generators 366, 368, and 370, is modulated separately by a separate communication signal via electrical connectors schematically illustrated as connectors 372. The optical component 374 of the present invention is aligned to combine the individual beams produced by optical generators 366, 368, and 370, into a single combined beam 376. The single combined beam is then focused by way of lens 378 into a beam 380 onto the end of a fiber optic 362 for transmission to a remote location

At the remote location, as illustrated in Figure 31, the combined spectral beam is transmitted as shown at 382 from fiber optic 362 and focused by lens 384 through the optical component 386 of the present invention onto a plurality of photo detectors 388, 390, and 392. The optical component 386 spatially and spectrally separates the combined beam 382 into its spectral components that are individually focused on photo detectors 388, 390, and 392. Alignment of the optical component 386 and selection of the dichroic filter layers allows for accurate separation of each of these spectral bands that is produced by optical generators 366, 368, and 370, onto photo detectors 388, 390, 392.

The device of Figure 31 allows for transmission of multiple channels on a single fiber optic 362 by virtue of the ability to spatially combine a plurality of individual beams having different spectral ranges for transmission across fiber optic 362 and subsequently separate the optical beam into its spectral components at the receiving end. In this manner, the present invention provides the ability to transmit multiple carrier bands on a single fiber optic. Of course, as many spectral bands as desired can be transmitted and the present invention is ideally suited for transmitting multiple spectral bands since the dichroic layers can be designed as notch filters to reflect and transmit very narrow spectral bands. Additionally, the optical signal can be generated by any desired optical source including the aperture device 344 illustrated in the electronic filter disclosed in Figure 30. Also, the optical source 364 can comprise a series of line generators or a matrix of generators that can be focused by lens 378 onto an array of fiber optic cables to facilitate transmission over multiple fiber optic cables in a simple and easy manner.

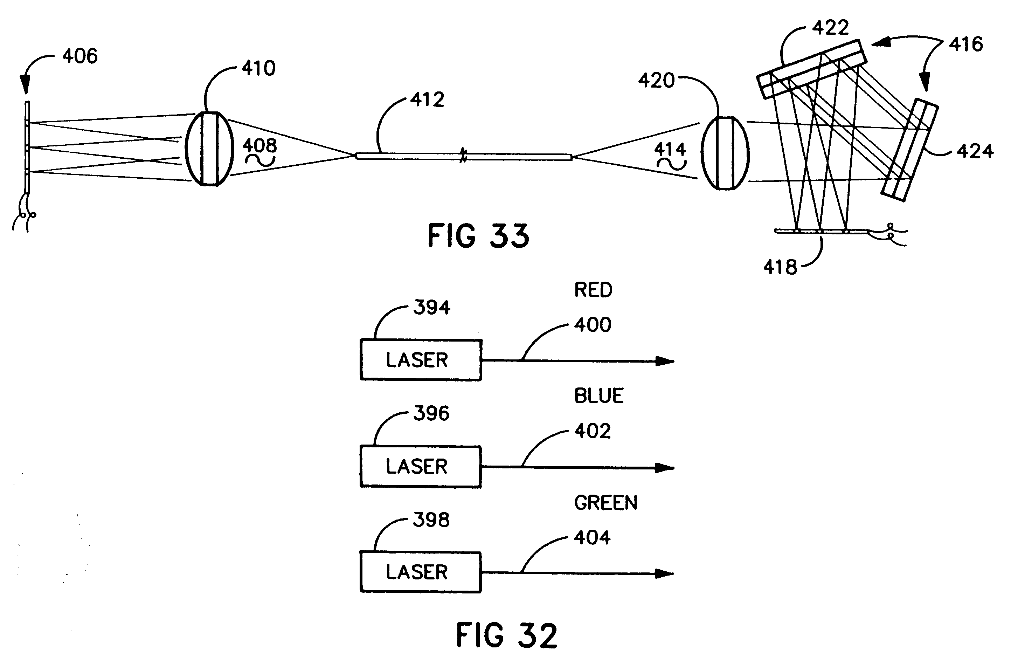

Figure 32 schematically illustrates the use of multiple laser sources 394, 396 and 398, which can comprise solid state lasers or gaseous lasers depending upon the application of the optical source. As illustrated in Figure 32, laser 394 is capable of generating a red beam 400 while laser 396 generates a blue beam 402 and laser 398 generates a green beam 404. Again, as many different optical sources can be used as desired to produce as many beams as required. Laser sources can be used in any of the applications of the present invention illustrated herein. For example, gaseous lasers may be required to produce sufficient power for transmission over extended distances over a fiber optic 362, as illustrated in Figure 31. Additionally, it may be advantageous to use gaseous lasers in the various projection systems, such as the projection system illustrated in Figure 25, to produce sufficient illumination of the projection source. Also, color holographic projection or recording may be implemented using lasers.

Figure 33 shows an alternative implementation of the device illustrated in Figure 31. As illustrated in Figure 33, an optical generator 406 capable of generating a plurality of spectral beams is combined into a single beam 408 by lens 410. Lens 410 combines the individual spectral beams into the single combined beam 408 and focuses the single combined beam 408 on the end of fiber optic 412. The invention is then implemented in substantially the same manner as described in Figure 31 at the receiving end to spatially separate the combined beam 414 by way of optical component 416. Each of the individual spectral beams is focused onto a photo detector 418 by way of lens 420. Because the optical path lengths of each of the individual beams is not critical, due to the fact that each spectral beam comprises an individual carrier band, it is not essential that both composite dichroic devices 422 and 424 be employed to separate the combined beam 414. Hence, only a single composite dichroic device, such as dichroic device 424, is necessary in accordance with the invention illustrated in Figure 33.

The present invention therefore provides both an optical separator device as well as an optical combiner device which can be employed in a number of unique implementations. The composite dichroic layer devices of the present invention can be employed in a number of different ways with a wide range of variables to produce the desired results and optical quality. The present invention is capable of inexpensively combining or separating individual substantially parallel spectral beams which eliminates many of the problems involved with alignment of components. Additionally, construction techniques of the optical component are greatly simplified over prior art devices, such as dichroic prisms, allowing for an optical component capable of producing comparable or better optical quality at only a fraction of the cost of dichroic prisms.

## Claims

1. An electronic colour filter device for filtering an input optical beam (334), the device comprising:
spectral separator means (342) for spatially and spectrally separating said input beam (334) into a plurality of optical beams, said separator means (342) comprising dichroic beam splitters for producing beams having predetermined spectral ranges and substantially parallel optical axes;
means (346, 348, 350) defining apertures aligned with said plurality of beams, said apertures being arranged in a plane (344) and being separately controllable to control the transmission intensities of the respective beams in response to an electrical filter control signal;
characterised in that the device further includes:
focusing means (340) for focusing said input beams onto said plane (344), said spectral separator means (342) being disposed between said focusing means (340) and said plane (344); and said dichroic beam splitters being constructed and arranged so that said beams have substantially equal optical path lengths between said focusing means and said plane.

2. A device according to Claim 1 further comprising:
spectral combiner means (352) for spatially and spectrally combining said plurality of beams into a single combined output beam (336) having a predetermined single optical axis, and means for focusing (354) said single combined output beam (336), said spectral combiner means (352) comprising dichroic beam combiners which are constructed and arranged so that the plurality of optical beams have substantially equal optical path lengths between said plane and said means for focusing said single combined output beam.

## Patentansprüche

1. Eine elektronische Farbfiltervorrichtung zum Filtern eines optischen Eingangsstrahles (334), die folgende Merkmale aufweist:
eine spektrale Separatoreinrichtung (342) zum räumlichen und spektralen Trennen des Eingangsstrahles (334) in eine Mehrzahl von optischen Strahlen, wobei die Separatoreinrichtung (342) dichroitische Strahlteiler zum Erzeugen von Strahlen mit vorbestimmten Spektralbereichen und im wesentlichen parallelen optischen Achsen aufweist;
eine Einrichtung (346, 348, 350), die Öffnungen definiert, die bezüglich der Mehrzahl der Strahlen ausgerichtet sind, wobei die Öffnungen in einer Ebene (344) angeordnet sind, und die getrennt steuerbar sind, um die Durchlaßintensitäten der jeweiligen Strahlen als Reaktion auf ein elektrisches Filtersteuersignal zu steuern;
dadurch gekennzeichnet, daß die Vorrichtung ferner folgendes Merkmal aufweist:
eine Fokussiereinrichtung (340) zum Fokussieren der Eingangsstrahlen auf die Ebene (344), wobei die spektrale Separatoreinrichtung (342) zwischen der Fokussiereinrichtung (340) und der Ebene (344) angeordnet ist; wobei die dichroitischen Strahlteiler derart aufgebaut und angeordnet sind, daß die Strahlen im wesentlichen gleiche optische Weglängen zwischen der Fokussiereinrichtung und der Ebene aufweisen.

2. Eine Vorrichtung gemäß Anspruch 1, die ferner folgende Merkmale aufweist:
eine spektrale Kombinierer-Einrichtung (352) zum räumlichen und spektralen Kombinieren der Mehrzahl von Strahlen in einen einzigen kombinierten Ausgangsstrahl (336) mit einer vorbestimmten einzigen optischen Achse, und eine Einrichtung zum Fokussieren (354) des einzigen kombinierten Ausgangsstrahls (336), wobei die spektrale Kombinierer-Einrichtung (352) dichroitische Strahlkombinierer aufweist, die derart aufgebaut und angeordnet sind, daß die Mehrzahl der optischen Strahlen im wesentlichen gleiche optische Weglängen zwischen der Ebene und der Einrichtung zum Fokussieren des einzigen kombinierten Ausgangsstrahls aufweisen.

## Revendications

1. Un dispositif électronique de filtre couleur pour filtrer un faisceau optique d'entrée (334), le dispositif comprenant:
un moyen séparateur spectral (342) pour séparer spatialement et spectralement ledit faisceau d'entrée (334) en une série de faisceaux optiques, ledit moyen séparateur (342) comprenant des diviseurs dichroïques de faisceau pour produire des faisceaux à plages spectrales prédéterminées et à axes optiques sensiblement parallèles;
un moyen (346, 348, 350) définissant des ouvertures alignées avec ladite série de faisceaux, lesdites ouvertures étant agencées dans un plan (344) et étant réglables séparément pour régler les intensités de transmission des faisceaux respectifs en réponse à un signal électrique de réglage de filtre;
caractérisé en ce que le dispositif inclut en outre:
un moyen de focalisation (340) pour focaliser lesdits faisceaux d'entrée sur ledit plan (344), ledit moyen séparateur spectral (342) étant disposé entre ledit moyen de focalisation (340) et ledit plan (344); et lesdits diviseurs dichroïques de faisceau étant structurés et agencés d'une manière telle que les longueurs des trajets optiques desdits faisceaux entre ledit moyen de focalisation et ledit plan desdits faisceaux sont sensiblement égales.

2. Un dispositif selon la revendication 1, comprenant en outre:
un moyen combinatoire spectral (352) pour combiner spatialement et spectralement ladite série de faisceaux en un faisceau combiné unique de sortie (336) à axe optique prédéterminé unique, et un moyen de focalisation (354) dudit faisceau combiné unique de sortie (336), ledit moyen combinatoire spectral (352) comprenant des combinateurs dichroïques de faisceaux qui sont structurés et agencés d'une manière telle que les longueurs des trajets optiques de la série des faisceaux optiques entre ledit plan et ledit moyen de focalisation dudit moyen combiné unique de sortie sont sensiblement égales.
